# EUROPÄISCHE PATENTANMELDUNG

(11) **EP 2 078 949 A2**
(43) Veröffentlichungstag der Anmeldung: **15.07.2009**
(21) Anmeldenummer: 09150126.2
(22) Anmeldetag: 06.01.2009
(51) Int. Cl.: G01N 11/14

(54) **Rheometer**

(30) Priorität: 10.01.2008 DE 102008003824
(71) Anmelder: JADO Extruvision GmbH, 30419 Hannover (DE)
(72) Erfinder: Uphus, Ing. Reinhard, 30419, Hannover (DE)
(74) Vertreter: Baronetzky, Klaus

(57) **Zusammenfassung**

Die Erfindung betrifft ein Rheometer für die Messung der Viskosität eines Fluids, mit einem Extruder, mit welchem das Rheometer mit dem Fluid füllbar ist. Die Drehzahl des Extruders ist für das Befüllen des Rheometers einstellbar.

## Beschreibung

Die Erfindung betrifft ein Rheometer, gemäß dem Oberbegriff von Anspruch 1, das der Messung der Viskosität eines Fluids dient.

Zu den hier zu messenden Fluiden zählen beispielsweise Kautschuk-Mischungen und Polymerschmelzen. Für Polymerschmelzen können z.B. Rotationsviskosimeter nach dem Couetteprinzip oder nach dem Kegel-Platte-Prinzip eingesetzt werden, wobei das letztgenannte Prinzip den Vorteil hat, dass die Schergeschwindigkeit unabhängig vom Radius konstant ist.

Derartigen Rotationsviskosimetern ist gemeinsam, dass ein rotierender Körper mit einer vorgegebenen Antriebskraft angetrieben wird und der Widerstand, den das Fluid der Drehung entgegensetzt, gemessen wird. Hierdurch lässt sich der Scherwiderstand des Fluids und damit die Viskosität bestimmen.

Voraussetzung für die zutreffende Messung ist es, dass das Fluid sich nicht von der Wand des Rheometers ablöst. Der Rotationskörper darf insofern nicht "durchrutschen".

Um ein Durchrutschen zu verhindern, ist es bekannt geworden, die Wand des Rotationskörpers mit profilierten Oberflächen auszugestalten, wie es bei Mooney-Viskosimetern der Fall ist. Diese Lösung hat sich praktisch durchgesetzt, wobei von gewissen Nachteilen die Realisierung der dortigen Innenecken ist. Beim Wechsel der Zusammensetzung des Fluids verbleiben typischerweise Reste des vorigen Fluids in den Innenecken, so dass es zu Verunreinigungen kommt.

Selbst bei Rheometern mit profilierten Oberflächen kann es bei hoch viskosen und hoch elastischen Mischungen zum Wandgleiten kommen. Typischerweise wird die Viskosität bei einer vorgegebenen Temperatur gemessen, beispielsweise 100 °C, und es wird ein entsprechender Rohling eingelegt, der erwärmt wird. Für den Ausgleich der Temperatur wird eine Wartezeit von beispielsweise 1 Minute einkalkuliert, aber dennoch ist der Temperaturausgleich regelmäßig nicht vollständig, da Polymere ausgesprochen schlechte Wärmeleiter sind.

Durch den Betrieb des Rheometers entsteht andererseits typischerweise eine weitere Temperaturerhöhung und Scherwirkung durch die das Material beansprucht wird. Ein Temperaturausgleich lässt sich insofern regelmäßig erst nach einer ausgesprochen langen Wartezeit realisieren.

Es ist auch bereits bekannt geworden, Rheometer ausgangsseitig eines Extruders anzuschließen. Ein Beispiel für eine derartige Lösung lässt sich aus der DE 33 24 842 entnehmen. Bei dieser Lösung sollen Diskontinuitäten im Flüssigkeitsstrom durch ein speziell gebildetetes Torsionsrohr mit einem Ringspalt vermieden werden. Andererseits ist dies Konstruktion recht aufwändig, aber dennoch kann es bei hochviskosen Fluiden zur Wandablösung kommen.

Daher liegt der Erfindung die Aufgabe zu Grunde, ein Rheometer gemäß dem Oberbegriff von Anspruch 1 zu schaffen, das einen großen Messbereich hat, also auch für hochviskose Materialien geeignet ist, wobei dennoch die Möglichkeit bestehen soll, kontinuierliche Messungen vorzunehmen.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass das Rheometer von der Extruderschnecke gezielt in Abhängigkeit von dem Material bzw. dem Innendruck des Materials gefüllt wird. Durch die Einstellbarkeit des Materialstroms, der das Rheometer füllt, lässt sich überraschend die Neigung von hochviskosen Fluiden zur Wandablösung kompensieren. Bei hochviskosen Fluiden entsteht bei der entsprechenden volumetrischen Förderung ein höherer Druck. Durch die Druckzunahme lässt sich die Neigung zum Wandgleiten im Rheometer reduzieren.

Andererseits ist ein Extruder, beispielsweise ein typischer Schneckenextruder, kein volumetrischer Förderer. Dementsprechend ist es erfindungsgemäß vorgesehen, die Drehzahl des Extruders für den genannten Zweck zu erhöhen, bzw. in allgemeiner Weise so einstellbar zu machen, dass der Innendruck des Rheometers in Abhängigkeit von dem gemessenen Fluid optimiert ist.

Besonders günstig in diesem Zusammenhang ist es, wenn ein Drucksensor den Innendruck des Fluids erfasst und die Drehzahl des Extruders in Abhängigkeit hiervon eingestellt wird.

Erfindungsgemäß wird auch in günstiger Ausgestaltung die Erwärmung im Bereich der Messkammer des Rheometers erfasst. Durch zunehmende innere Reibung entsteht eine zunehmende Erwärmung. Durch Reduktion der Drehzahl der Extruderschnecke kann die Massetemperatur bevorzugt auf Solltemperatur gebracht werden, wobei der Druck in der Messkammer über den Antrieb des Extruders in weiten Bereichen einstellbar ist.

Die Erfindung erlaubt die Realisierung eines geschlossenen Systems, bei dem also die Auslassöffnung der Messkammer verschlossen wird, wenn die Messkammer vollständig gefüllt ist, aber auch die Realisierung eines offenen Systems. Im zweiten Fall dient die Düse des Extruders als Strömungswiderstand, gegen den ein Druck aufgebaut wird.

Überraschend lässt sich erfindungsgemäß durch die Druckerhöhung das Wandrutschen vollständig vermeiden. Erfindungsgemäß wird hierzu ein besonders hoher Massedruck durch den Extruder bereitgestellt, so dass sich ein besonders großer Reibungswiderstand gegenüber der Wand ergibt, der ein Abreißen dort verhindert.

Ein weiterer erfindungsgemäßer Vorteil ist auch die Reduktion der Analysezeit, gerade auch bei hochviskosen und elastischen Polymerschmelzen und Kautschuk-Mischungen. Die Druckerhöhung erlaubt eine gute Durchmischung zur Reduktion der Temperaturunterschiede, so dass die Messzeit signifikant vermindert werden kann.

Weitere Vorteile, Einzelheiten und Merkmale ergeben sich aus der nachfolgenden Beschreibung eines Ausführungsbeispiels anhand der Zeichnungen:

Es zeigen:
- Fig. 1: eine schematische Ansicht eines Extruders mit einem erfindungsgemäßen Rheometer; und
- Fig. 2: eine schematische Schnittansicht des Extruders gemäß Fig. 1, in einer anderen Darstellung.

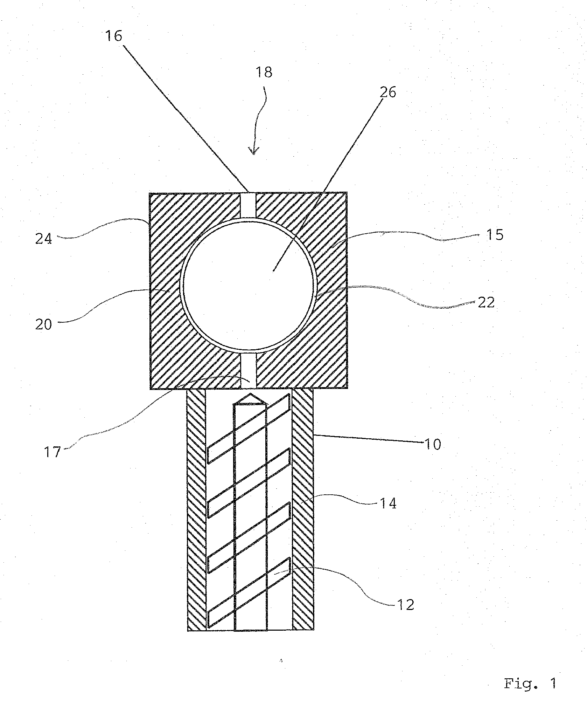

Aus Fig. 1 ist ein Extruder 10 ersichtlich, der eine Extruderschnecke 12 in einem Extrudergehäuse 14 drehbar lagert. Die Extruderschnecke 12 wird über einen nicht dargestellten Extrudermotor angetrieben. Ihre Drehzahl entspricht im Wesentlichen der Förderrate der von dem Extruder extrudierten Masse, wobei jedoch keine exakte Proportionalität vorliegt.

Anschließend an den Extruder 10 ist ein Spritzkopf 15 vorgesehen, der über eine Einlassöffnung 17 befüllbar ist und in einer Extruderdüse 16 mündet.

Zwischen der Einlassöffnung 17 und der Extruderdüse 16 ist ein Strömungskanal 18 ausgebildet, der sich durch eine Rheometerkammer 20 eines Rheometers 24 erstreckt. Das Rheometer 24 weist einen Rotationskörper 26 auf, der im dargestellten Ausführungsbeispiel als Doppelkegel ausgebildet ist.

Wie ersichtlich ist, besteht ein lediglich ausgesprochen schmaler Ringspalt 22 zwischen den Außenumfang des Rotationskörpers 26 und der Innenwand der Rheometerkammer 20. Der Ringspalt kann beispielsweise eine Breite von 1% bis 5% des Durchmessers der Rheometerkammer 20 aufweisen.

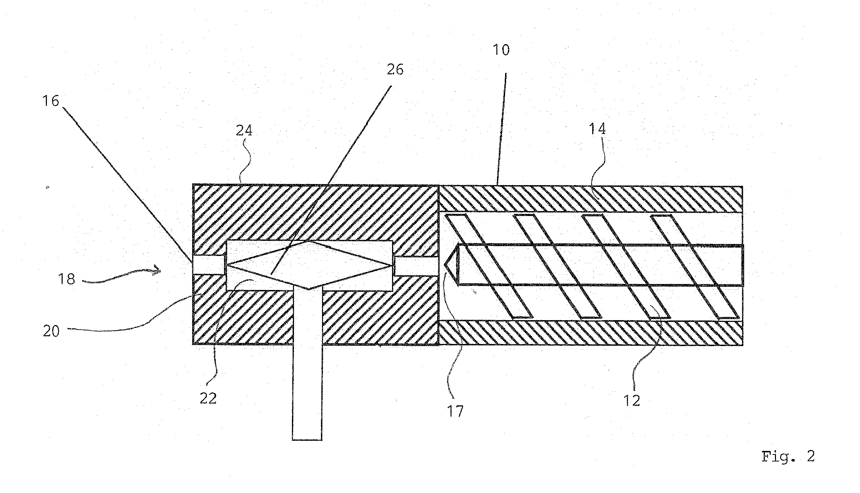

Wie aus Fig. 2 ersichtlich ist, erstreckt sich der Strömungskanal 18 im Bereich des Rheometers 24 größtenteils auch oberhalb und unterhalb des doppelkegelförmigen Rotationskörpers 26. Der dort vorgesehene Strömungsquerschnitt, der sich im Grunde ebenfalls ringförmig erstreckt, ist deutlich größer als der Durchmesser der Einlassöffnung 17 sowie der Düse 16. Die Strömungsgeschwindigkeit der extrudierten und viskosen Masse ist insofern an dieser Stelle deutlich geringer als beispielsweise in der Düse 16.

Erfindungsgemäß besonders günstig ist es, wenn das Rheometer unmittelbar angrenzend an den Ausgang des Extruders 10 angeordnet ist und die dort gemessene extrudierte Masse dementsprechend auf der gleichen Temperatur wie im Extruder ist. Hierdurch wird die Messung der Viskosität der Masse nicht durch unterschiedliche Temperaturen verfälscht, wobei zusätzlich bevorzugt ein Thermometer und/oder ein Druckfühler im Bereich der Einlassöffnung 17 unmittelbar angrenzend an das Rheometer 24 vorgesehen ist.

In strömungstechnischer Hinsicht ist das Rheometer 24 im Strömungskanal 18 zwischen der Extruderschnecke 12 und der Extruderdüse 16 angeordnet. Das Rheometer 24 ist als Rotations-Viskosimeter ausgebildet und arbeitet nach dem Couette-Prinzip. Der Antrieb des Rotationskörpers 26 ist hier nicht dargestellt und kann in an sich bekannter Weise erfolgen, wobei bei der Drehung des Rotationskörpers die in dem Rheometer aufgenommene Masse auf Scherung und/oder Schub beansprucht wird. Die Viskosität ergibt sich insofern aus dem Drehwiderstand des Rotationskörpers 26.

Erfindungsgemäß ist für das Befüllen des Rheometers 24 die Drehzahl der Extruderschnecke 12 einstellbar. Bei einer hochviskosen Masse arbeitet die Extruderschnecke 12 gegen einen vergleichsweise hohen Innendruck, während bei einer nahezu flüssigen Masse der Innendruck entsprechend gering ist. Auch für unterschiedliche Viskositäten kann durch Einstellung der Drehzahl der Extruderschnecke 12 die Solltemperatur für die Messung rasch und flexibel erreicht werden.

Erfindungsgemäß wird ein Wandgleiten in dem Rheometer 24 sicher verhindert, wobei gerade bei hochviskosen Massen der Druck deutlich erhöht wird. Hierdurch wird das Gleiten an der Innenwand der Rheometerkammer 20 verhindert.

Die Rheometerkammer 20 weist in einer modifizierten Ausgestaltung eine zusätzliche Entlüftungsöffnung auf, beispielsweise im Bereich der Achse des Rotationskörpers 26, wobei es sich versteht, dass auch mehrere Entlüftungsöffnungen vorgesehen sein können, die hier nicht dargestellt ist.

Es ist auch möglich, für die gezielte Messung der Viskosität einer bestimmten Masse die Extruderdüse 16 nach Befüllen der Rheometerkammer 20 zu verschließen, wobei bei dieser Ausgestaltung natürlich eine kontinuierliche Messung nicht möglich ist.

Demgegenüber ist bei der hier dargestellten, bevorzugten Ausgestaltung eine kontinuierliche Messung der Viskosität möglich.

## Patentansprüche

1. Rheometer für die Messung der Viskosität eines Fluids, mit einem Extruder, mit welchem das Rheometer mit dem Fluid füllbar ist, **dadurch gekennzeichnet, dass** die Drehzahl des Extruders (10) für das Befüllen und/oder für das Messen des als Kegel ausgebildeten Rheometers (24) einstellbar ist.

2. Rheometer nach Anspruch 1, **dadurch gekennzeichnet, dass** das Rheometer (24) ausgangsseitig einer Extruderschnecke (12) des Extruders (10) und stromauf einer Extruderdüse (16) angeschlossen ist.

3. Rheometer nach einem der vorhergehenden Ansprüche, **dadurch gekennzeichnet, dass** eine Extruderdüse (16) des Extruders (10) für das Befüllen des Rheometers (24) verschließbar ist.

4. Rheometer nach einem der vorhergehenden Ansprüche, **dadurch gekennzeichnet, dass** im Bereich des Rheometers (24) ein Drucksensor angeordnet ist, und die Drehzahl des Extruders (10) an den erwünschten Druck angepasst wird.

5. Rheomether nach einem der vorhergehenden Ansprüche, **dadurch gekennzeichnet**, der Hauptstrom des Fluids ausgangsseitig des Extruders durch das Rheometer (24) geleitet wird.

6. Rheometer nach einem der vorhergehenden Ansprüche, **dadurch gekennzeichnet, dass** das Rheometer (24) kontinuierlich die Viskosität des Fluids misst.

7. Rheometer nach einem der vorhergehenden Ansprüche, **dadurch gekennzeichnet, dass** eine Auswerteschaltung an das Rheometer (24) und insbesondere auch an einen Drucksensor und weiter bevorzugt an mindestens einen Temperatursensor angeschlossen ist, über welchen die Viskosität des Fluids im Vergleich mit insbesondere dem Druck am Rheometer (24) und insbesondere auch mit der Temperatur erfassbar ist.

8. Rheometer nach einem der vorhergehenden Ansprüche, **dadurch gekennzeichnet, dass** der Extruder (10) eine Extruderdüse (16) aufweist, die insbesondere als Flachdüse ausgebildet ist und an der das extrudierte Fluid sichtbar und visuell beurteilbar ist.

9. Rheometer nach einem der vorhergehenden Ansprüche, **dadurch gekennzeichnet, dass** das Rheometer (24) als oszillierendes und/oder rotierendes Viskosimeter ausgebildet ist, wobei es bei der Ausbildung als rotierendes Viskosimeter mit einer überlagerten Schwingung ausgebildet ist.

10. Rheometer nach einem der vorhergehenden Ansprüche, **dadurch gekennzeichnet, dass** der Massedruck des Fluids in dem Rheometer (24) auf mehr als 30 bar, insbesondere etwa 100 bar, eingestellt wird.

11. Rheometer nach einem der vorhergehenden Ansprüche, **dadurch gekennzeichnet, dass** das Rheometer (24) eine unprofilierte Wandoberfläche aufweist, und dass bei der Messung das Fluid an der Wand des Rheometers (24) haftet.

12. Rheometer nach einem der vorhergehenden Ansprüche, **dadurch gekennzeichnet, dass** der Durchmesser des Rotationskörper (26) im Wesentlichen dem Durchmesser der Rheometerkammer entspricht.

13. Rheometer nach Anspruch 12, **dadurch gekennzeichnet, dass** der Rotationskörper (26) als Doppelkegel ausgebildet ist, dessen Kegelwinkel mehr als 90°, bevorzugt mehr als 120° und insbesondere etwa 150° beträgt.

14. Rheometer nach einem der vorhergehenden Ansprüche, **dadurch gekennzeichnet, dass** die Rheometerkammer (20) flachzylindrisch ausgebildet ist und ein Höhen/Durchmesserverhältnis von weniger als 1:2, insbesondere etwa 1:3,5, aufweist.

15. Rheometer nach einem der vorhergehenden Ansprüche, **dadurch gekennzeichnet, dass** der Durchmesser der Rheometerkammer (20) und/oder des Rotationskörpers (26) größer als der Durchmesser der Extruderschnecke (12) ist.
